# EUROPEAN PATENT SPECIFICATION

(11) **EP 2 767 132 B1**
(45) Date of publication and mention of the grant of the patent: **06.06.2018**
(21) Application number: 12806682.6
(22) Date of filing: 15.11.2012
(51) Int. Cl.: H04M 1/725, H04W 76/02, H04W 4/00, H04W 8/00, H04W 84/18

(54) **METHOD, WIRELESS DEVICE AND WIRELESS COMMUNICATIONS SYSTEM TO GUIDE A USER OF A WIRELESS DEVICE TO ESTABLISH AN OPTIMAL WIRELESS DIRECT LINK TO ANOTHER WIRELESS DEVICE**
VERFAHREN, DRAHTLOSVORRICHTUNG UND DRAHTLOSES KOMMUNIKATIONSSYSTEM ZUR ANLEITUNG EINES BENUTZER EINER DRAHTLOSVORRICHTUNG FÜR DEN AUFBAU EINER OPTIMALEN DIREKTEN DRAHTLOSVERBINDUNG ZU EINER ANDEREN DRAHTLOSVORRICHTUNG
PROCÉDÉ, DISPOSITIF SANS FIL ET SYSTÈME DE COMMUNICATION SANS FIL POUR GUIDER UN UTILISATEUR D'UN DISPOSITIF SANS FIL POUR ÉTABLIR UNE LIAISON DIRECTE SANS FIL OPTIMALE AVEC UN AUTRE DISPOSITIF SANS FIL

(30) Priority: 01.12.2011 US 201161565648 P; 06.06.2012 US 201261656147 P
(43) Date of publication of application: 20.08.2014
(73) Proprietor: Koninklijke Philips N.V., 5656 AE Eindhoven (NL)
(72) Inventor: DEES, Walter, NL-5656 AE Eindhoven (NL); BERNSEN, Johannes, Arnoldus, Cornelis, NL-5656 AE Eindhoven (NL); HOLTMAN, Koen, Johanna, Guillaume, NL-5656 AE Eindhoven (NL); VAN DE LAAR, Franciscus, Antonius, Maria, NL-5656 AE Eindhoven (NL)
(74) Representative: Kroeze, Johannes Antonius
(86) International application number: PCT/IB2012/056450
(87) International publication number: WO 2013/080080

(56) References cited:
- US-A1- 2008 093 447
- US-A1- 2011 124 287
- US-A1- 2011 256 895

## Description

This invention relates to wireless connections and, more particularly, to a method, a first device, a computer program product and a wireless communications system for providing guidance in establishing an optimal wireless link for short-range peer-to-peer connections.

Most Wi-Fi access points are used to provide a Wireless LAN connection throughout an entire house or one or more office spaces. The main parameters that influence the signal strength from a Wi-Fi access point to a receiving device are the relative positioning of the Wi-Fi access point to a receiving device including antenna positions, the floor plan of the house or office space, where walls are placed, which materials are used, and the placement of other access points in the vicinity. However, when the distance between the receiving device and the Wi-Fi access point is sufficiently great the exact position or location of the antennas at the physical Wi-Fi access point is not of great concern.

Furthermore, many laptops, mobile phones and other portable devices can show the signal strength of Wi-Fi access points in the vicinity. This is typically shown using a bar graph and/or values ranging from 0 to 100% signal strength. Sometimes this is augmented with relevant values such as a received signal strength indicator (RSSI), amount of packet loss, etc. To improve signal strength a user not having knowledge of the position or location of the antennas at the physical Wi-Fi access point will typically move the portable device around while watching the signal strength or other relevant value.

However, for peer-to-peer connections, in particular, short-range high-performance applications, such as, wireless docking of a laptop with a docking station, or Wi-Fi Direct access from a mobile phone to a printer device or storage device or TV, it is important to know the location of the antennas at both the physical Wi-Fi access point device and the device intended for connection in order to establish an optimal wireless link. Whether a wireless link is optimal may be determined based on throughput, error rate, etc. The devices that are involved in these peer-to-peer connections can range from small portable devices to large stationary devices, such as office printers. For aesthetical reasons, the antennas in these devices are often hidden and hence invisible to the user. Therefore, there is a need to indicate the locations of these antennas and to provide guidance on positioning or placement of the respective devices to achieve an optimal link.

For very short range connectivity using NFC (Near Field Communication), one solution is to place stickers (for example with the NFC logo) on the devices at the location of an NFC tag/antenna, to indicate to a user where to place the devices relative to each other in order to establish an optimal connection. Since Wi-Fi connections are typically longer range and in some applications involve multiple antennas, for example, Multiple-Input and Multiple-Output (MIMO) connections, the optimal placement of a peer device may be difficult to indicate by simply using stickers. Also, placing stickers everywhere is not a very elegant solution. These stickers may not be aesthetically pleasing, and only provide limited, static information.

US2008/0093447 describes a portable electronic device that includes an antenna and at least one of a transmitter or a receiver connected to the antenna for transferring information between the portable electronic device and a corresponding device. The corresponding device includes a visual indicator indicative of a location of an antenna of the corresponding device. The portable electronic device further includes an imaging device for obtaining an image of the visual indicator, an image analyzer for determining a location of the portable electronic device antenna relative to that of the corresponding device based on the image, a direction analyzer for determining a movement direction of the portable electronic device that would reduce an alignment offset between the antennas, and a directional indicator for indicating the movement direction to a user of the portable electronic device. A sticker is used as visual indicator indicative of a location of the antenna of the corresponding device. The sticker is detected by the image analyzer in the obtained image.

US2011/0256895 describes an apparatus for facilitating peripheral device selection. The apparatus determines a geographical location of the peripheral as included in a communication of the peripheral, e.g. based on GPS data. A position of the peripheral antenna is measured relative to the apparatus based on signals received at the apparatus antenna. A camera may provide an image in which the peripheral is identified. A distance estimate may be derived from focusing the camera. The visual image and the measured antenna position are associated, and the apparatus may show a graphical representation of the calculated antenna position, depicted as a square superimposed on the camera image.

The present invention is defined by a method as recited in claim 1, by a computer program product as recited in claim 8, by a first device as recited in claim 9 and by a wireless communications system as recited in claim 13. It is noted that technical descriptions designated as "embodiments" in the following description, which are not covered by the scope of the appended claims, are considered as examples useful for understanding the invention.

Advantageously, an embodiment disclosed herein illustrates a mobile device utilizing antenna location information about another device to provide audio, visual or audiovisual indications for placement or positioning of the mobile device in order to establish an optimal wireless link between the mobile device and the other device.

Another embodiment disclosed herein includes a method for a first device to communicate with a second device in a wireless network, the method including: receiving, by the first device, location information of an antenna in the second device; providing, by the first device, at least one of an audio, visual, and an audiovisual representation of the location of the antenna in the second device.

In another embodiment disclosed herein a device for communicating with another device in a wireless network includes: a radio for receiving location information of an antenna in the other device; and an output for providing at least one of an audio, visual, and audiovisual representation of the location of the antenna in the other device.

In another embodiment disclosed herein a system includes a first device communicating with a second device in a wireless network, the second device receiving location information of an antenna in a third device, the second device providing the first device with the location information of the antenna in the third device, and wherein the first device provides at least one of an audio, visual and audiovisual representation of the location of the antenna in the third device.

In general the various aspects of the invention may be combined and coupled in any way possible within the scope of the various embodiments. The subject matter that is regarded as the invention is particularly pointed out and distinctly claimed in the claims at the conclusion of the specification. The foregoing and other features and advantages will be apparent from the following detailed description taken in conjunction with the accompanying drawings.
Fig. 1 shows a representation of the coordinates of the center of an antenna in a device according to an embodiment of the invention.
Fig. 2 shows a representation of the shape of an antenna in a device according to an embodiment of the invention.
Fig. 3 shows a representation of the coordinates and/or the shape of an antenna in a device according to an embodiment of the invention.
Fig. 4 shows a representation of the shape and location of multiple antennas according to an embodiment of the invention.
Fig. 5 shows a portable device that is guided for placement at an optimal position according to an embodiment of the invention.
Fig. 6 shows a portable device that is guided to dock with a host according to an embodiment of the invention.

Certain embodiments herein describe a system and method providing guidance for establishing an optimal wireless link for short-range peer-to-peer connections. Other embodiments describe a first device receiving information from a second device to enable the first device to provide at least one of an audio, visual, and audiovisual representation of the location, geometry, and other properties, such as polarization, of the antennas of the second device, and/or how to place or position the first device with respect to the second device for establishing an optimal wireless link.

In one embodiment, a first device utilizes position and/or antenna shape information of the antennas in a second device. For example, the position and/or antenna shape information of the antennas may be two dimensional coordinates in a two-dimensional plane, which is parallel to a predetermined cross section of the second device.

Although the disclosed embodiments illustrate the use of coordinates as a representation of position and or shape of the antennas, other representations or indications, such as left, right, top, bottom, front, back, rectangle, circle, etc., are also utilized.

In another embodiment, a graphical illustration of the second device and sufficient information is utilized by the first device to overlay this graphical illustration with the location and/or shape information of the antennas and origin information in an audio, visual, or audiovisual representation to provide guidance on positioning. The graphical illustration may be, for example, a bitmap image. Sufficient information may be, for example, a pixel in the graphical illustration of the second device that denotes the origin of the coordinate system.

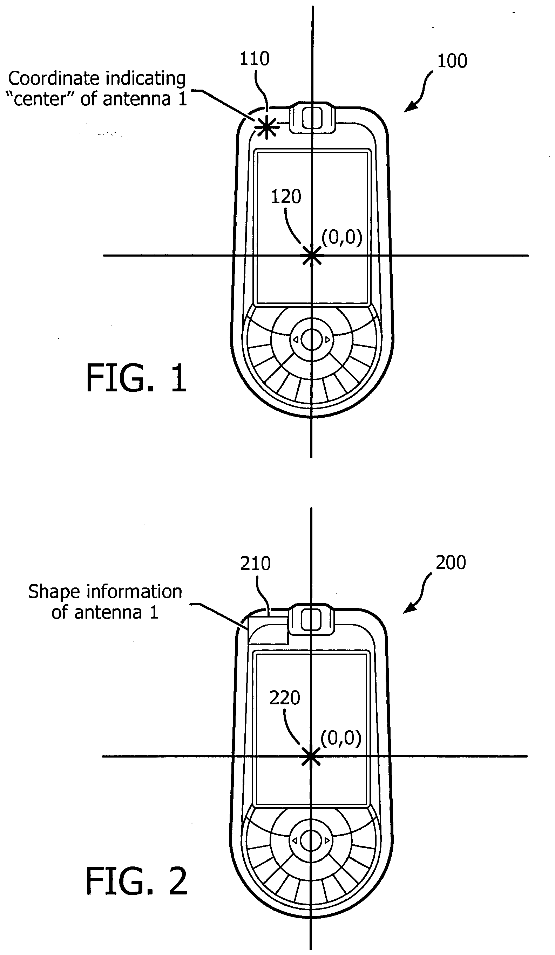

Fig. 1 illustrates the antenna position information of a device 100 based upon two-dimensional coordinates in a two-dimensional plane, which is parallel to a predetermined cross section. To determine the two-dimensional coordinates of the antenna position information, a predetermined spot 120 is designated to be the origin coordinate (0, 0) of the two-dimensional plane. The two-dimensional plane is parallel to a predetermined cross section of the device. In this example, the two-dimensional plane is parallel to the face of the device 100, and the origin coordinate (0, 0) is the center of the device 100. The two-dimensional coordinates of the antenna position provide the center of the antenna(s) 110 from the origin coordinate (0, 0).

According to the embodiment shown in Fig. 1, another device (not shown in Fig. 1) receives the two-dimensional coordinates of the antenna 110 position information of the device 100. By utilizing the two-dimensional coordinates the other device determines the center position of the antenna(s) 110 of the device 100. The other device utilizes this antenna position information to guide a user to place or position the two devices with respect to each other for establishing an optimal wireless link. For example, the other device may guide a user by audio, visual, or audiovisual cues to position the other device with respect to device 100 in order to establish an optimal wireless link between the two devices.

In an alternative embodiment, the device 100 utilizes the two-dimensional coordinates in order for the device 100 to provide guidance on positioning itself relative to another device (not shown in Fig. 1). The device 100 utilizes this antenna position coordinates to provide guidance to a user to place or position the two devices with respect to each other for establishing an optimal wireless link. For example, the device 100 may guide a user by audio, visual, or audiovisual cues to position the device 100 with respect to the other device in order to establish an optimal wireless link between the two devices.

Fig. 2 illustrates another embodiment where the antenna position information of a device 200 provides shape information of antenna(s) 210. The antenna position information is again based upon two-dimensional coordinates in a two-dimensional plane, which is parallel to a predetermined cross section. To determine the two-dimensional coordinates of the antenna shape information, a predetermined spot 220 is designated to be the origin coordinate (0, 0) of the two-dimensional plane. The two-dimensional plane is parallel to a predetermined cross section of the device. In this example, the two-dimensional plane is parallel to the face of the device 200, and the origin coordinate (0, 0) is the center of the device 200. In one example, two-dimensional coordinates define the shape of the antenna(s) and position relative to the origin coordinate (0, 0).

According to the embodiment shown in Fig. 2, another device (not shown in Fig. 2) utilizes the two-dimensional coordinates to guide a user to place or position the device 200 and the other device (not shown in Fig. 2) with respect to each other for establishing an optimal wireless link. For example, the other device may guide a user by audio, visual, or audiovisual cues to position the other device with respect to device 200 in order to establish an optimal wireless link between the two devices.

In an alternative embodiment, the device 200 utilizes the two dimensional coordinates in order for the device 200 to provide guidance on positioning itself relative to another device (not shown in Fig. 2). The device 200 utilizes this antenna position coordinates to provide guidance to, for example, a user to place or position the two devices with respect to each other for establishing an optimal wireless link. For example, the device 200 may guide a user by audio, visual, or audiovisual cues to position the device 200 with respect to the other device in order to establish an optimal wireless link between the two devices.

In the above Fig. 1 and Fig. 2, the actual shape of the device is shown using a graphical illustration, for these examples, a bitmap image. For example, the actual shape of the devices as illustrated in Fig. 1 and Fig. 2 may be represented on a screen of the "other device" or on the screen of device 100 or device 200. However, showing the actual shape on the display screen is not necessary if sufficient information is provided to guide a user on the positioning of the devices.

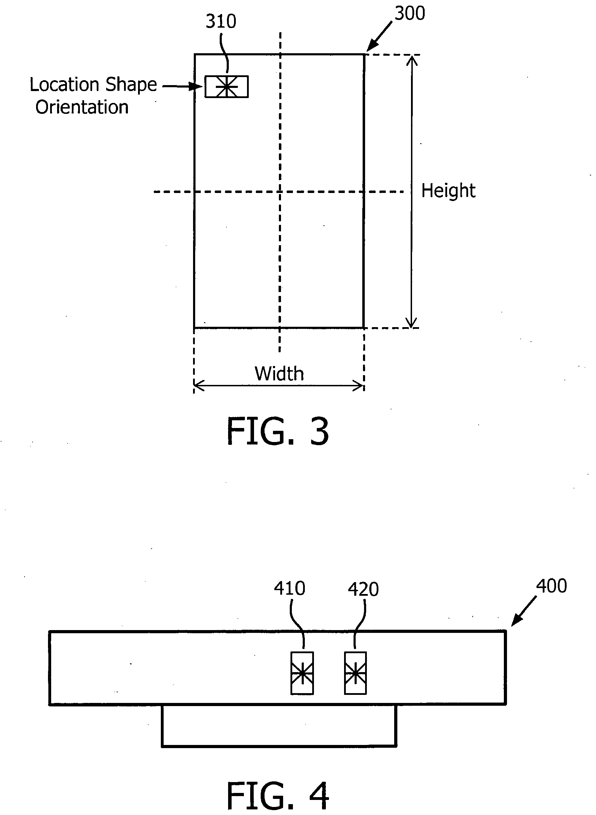

In a further embodiment, sufficient information, such as the width and height of a device, enables an abstract graphical representation of the device which shows the location/shape information of the antennas relative to the front surface of the device. For example, Fig. 3 shows a rectangle 300 to represent the front of the device and the placement of the antennas 310 in relation to that rectangle. In the embodiment as illustrated in Fig. 3, a device provides a graphical illustration, such as a bitmap image, that includes a visual representation of the location/shape of the antennas as part of the graphical information.

Thus, a display similar to the display illustrated in Fig. 3 will be represented on a screen of the device 100, device 200 or the "other device." For example, a representation of the device 200 is displayed together with the shape information of an antenna 210 on either the device 200 or the "other device", as discussed above with regard to Fig. 2. The visual display may be combined with audio cues, for example to guide a user to position the devices with respect to each other in order to establish an optimal wireless link between the two devices.

In certain embodiments, the antenna location information is provided to a first device by a second device through a wireless communication link between the first and second devices. In other embodiments, the antenna location information is provided to the first device by a network database storing the antenna location information of the second device via a network connection, such as the Internet. Additional antenna location information, such as the shape or orientation of the antenna may be provided to the first device by the same or similar means. Any combination of the above methods may be implemented to provide the antenna location information, device size information and other information useful to the first device in order to provide guidance on positioning relative to the second device.

In a further embodiment, the antenna location information provided includes the best location to place the first device relative to the antennas in the second device. As shown in Fig. 4, a second device 400 may have multiple antennas 410, 420. Depending on which one of the antennas 410, 420 provides the optimal wireless link, the best antenna is selected and the corresponding location information is provided as the best location to place the first device (not shown in Fig. 4) relative to the antennas in the second device 400. Alternatively, the best location can be determined through interpolation of the expected operation of the antennas based on whether or not certain Wi-Fi features, such as MIMO, are used.

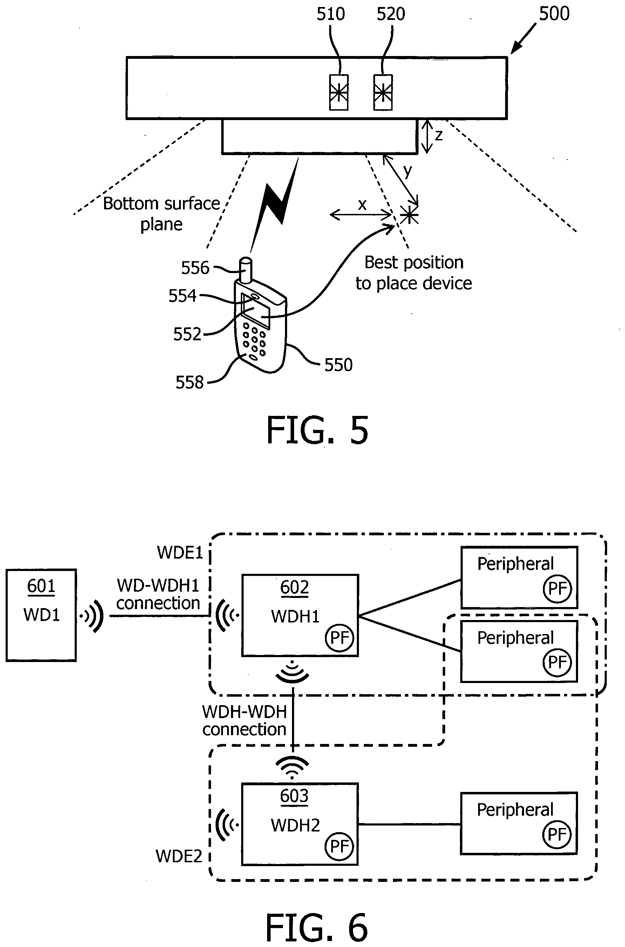

In a further embodiment, the antenna location information provided includes the best location to place a device given the assumption that a first device will be placed on a plane that matches the bottom surface of the second device, or the surface on which the second device is placed, and in front of a pre-defined cross section of the second device. As shown in Fig. 5, the second device 500 is configured to have two antennas 510, 520, and a space in front of the second device where the first device 550 can be placed or located. The space in front of the second device may be a bottom surface plane. For example the device 500 may be resting on a table top, where the table top is the bottom surface plane illustrated in Fig. 5.

The first device 550 receives the antenna location information including the best position information from the second device 500 through a wireless communication link between the first device 550 and second device 500 or from a network database storing the antenna location information, or any combination thereof. The display 552 and/or speaker 558 of the first device 550 indicate to the user the best position to place the first device relative the second device.

In a further embodiment, the first device 550 is provided with orientation information to allow the first device to calculate the angle between the front of the first device 550 and the predefined cross section of the second device 500. For example the orientation information may be an angle to earth's magnetic north, using a built-in compass. The first device 550 uses one or more of its own built-in compass, wireless triangulation, GPS, etc. to provide better guidance to the user. Further guidance refinement may be provided by using gyroscopic information, as many mobile devices also equipped with a gyroscope. Note that coarse grained location information (such as GPS location, GSM location, or Wi-Fi location information) can be added to the audio, visual, or audiovisual presentation and guidance provided to the user. This may include redirection instructions to connect to another device.

In a further embodiment, the first device 550 is provided with real-time information, for example on link performance, which the first device 550 utilizes to provide audio and/or visual instructions for guidance on placement, positioning or repositioning of the first device 550 to get the optimal link between the first device 550 and the second device 500, e.g., the instruction may ask the user to move the device slightly to the right based on the current position of the first device 550.

In a further embodiment, a burst of test messages is exchanged between device 550 and device 500. The test messages allow one or both first device 550 and second device 500 to measure certain parameters of the link, such as the error rate. The measurements are utilized to provide further guidance to the user. In an even further embodiment, the user is asked to place the first device 550 at a few specific positions relative to the second device 500. Then one or both devices 550, 500 perform measurements at the positions in order to further refine the user guidance on the optimal positioning.

In addition to the antenna information of the second device 500, the placement of the first device 550 relative to the second device 500 for an optimal link may also depend on the antenna information of the first device 550. In a further embodiment, both the antenna location information of the first device 550 and the second device 500 are used to match the optimal placement for both devices.

In a further embodiment the second device 500 receives the antenna location information from the first device 550 or from a database. The second device 500 provides the guidance for placing or positioning the first device 550. Furthermore, both devices 500, 550 may jointly provide guidance for placing or positioning the devices 500, 550 relative to each other.

In a further embodiment, Fig. 5 illustrates x, y and z axes. The first device 550 is provided with 3-dimensional coordinates of the position of the antennas and/or the best position for placement relative a chosen origin coordinate and chosen x, y and z axes. Further refinement may be provided by any of the above discussed methods.

In a further embodiment, an audio, visual, or audiovisual representation of expected or actual field strengths relative to the position of the antennas is provided. For example, the representation includes RSSI values as a set of functions of the distance from the antenna, or a polar diagram using distance/direction. The field strength representation may be provided assuming full transmit power, no nearby obstacles, reflection or interference sources. In an additional embodiment, the field strength representation accounts for the actual transmit power, detected reflection, obstacles or interference sources.

In another embodiment, the first device 550 uses a camera 554 to detect the second device 500 inside the video stream coming from the camera 554. The location/shape information of the antennas and/or field strength and/or best position to place the first device from any of the above methods is overlaid on top of the video stream, in order to provide placement guidance to the user. That is, the audio, visual, or audiovisual instructions are based on an augmented reality.

In another embodiment, the first device 550 and/or the second device 500 have a magnet to further guide the user to the correct spot.

Note that as shown in Fig. 5, the first device 550 is equipped with a radio connected to an antenna 556 to receive antenna placement information from the second device 500. The second device 550 may have its antenna location information stored in a database which would be available to the first device 500, for example over the Internet or other networks. In a further embodiment, the antenna location information is obtained from the Internet by either device 500 or 550.

In the embodiments where the antenna placement information is provided from one device to another device, such information may be provided at any convenient time.

Many different implementations or protocols can be used for exchanging antenna information between devices. Without loss of generality, the following non-limiting implementation alternatives for a first device to receive location information of an antenna in a second device are provided:

### 1) Pre-association device discovery information exchange

In this implementation alternative, the antenna location information is sent by a second device to a first device during the pre-association device discovery phase as defined by the Wi-Fi Direct specification (Wi-Fi Peer-to-Peer (P2P) Technical Specification, Version 1.1, 2010). The second device will add the antenna location information as a P2P attribute of the P2P Information Element, as defined in Section 4.1.1 of Wi-Fi Direct specification, that is sent in every beacon, probe request and probe response frame of every Wi-Fi Direct device, or as a sub-element inside a vendor specific Information Element that is sent in every beacon, probe request and probe response frame in addition to the P2P Information Element, such as a Wi-Fi Display, Wi-Fi Serial Bus or a Wi-Fi Docking specific Information Element.

### 2) Pre-association service discovery information exchange

In this implementation alternative, the antenna location information is sent by the second device to the first device during the pre-association service discovery phase as defined, for example, by Wi-Fi Direct. The second device will add the antenna location information inside a Service Discovery Response frame, for example, formatted according to section 4.2.10.2 of the Wi-Fi Direct specification, that is sent as a response to a service discovery query sent by the first device using a Service Discovery Query frame, for example, formatted according to section 4.2.10.1 of the Wi-Fi Direct specification. A pre-determined query value for the Query Data field within a Service Request TLV is used for the second device to recognize the request to return antenna location or other relevant antenna information. This can be a query value that requests general information about the other device, or a specific query specifically asking for the antenna location information.

The mechanism for pre-association service discovery allows the data to be fragmented over multiple frames. This allows for larger blocks of data to be exchanged. Hence, this implementation may include more detailed information about the antenna, e.g., antenna location, shape, orientation, than is typically possible using a pre-association device discovery information exchange. It can also be used to exchange a small bitmap with a graphical illustration.

The information does not necessarily have to remain static. Subsequent service discovery queries and responses may contain different values, and hence may be used, for example, by the second device to provide guidance information to the first device about where to best place the device based on, for example the current distance/location/signal strength of the first device.

### 3) Post-association information exchange

In this implementation alternative, the antenna location information is sent by the second device to the first during post-association information exchange. Post-association in this implementation defines that the first and second devices are associated, for example, to the same WLAN Access Point or Wi-Fi Direct Group Owner.

The location information is provided by the second device to the first device using various types of communication protocols, including HTTP, RTP, SOAP, using a pre-agreed, standardized or custom set of commands, or a pre-agreed, standardized or custom information exchange protocol directly on top of TCP/IP or raw socket communication.

Similar to the pre-association service discovery information exchange, the post-association information exchange is not limited in the type and size of data to be exchanged. Also dynamic information exchange may be implemented. Hence, very detailed antenna information may be exchanged.

Note the above described approach may also be extended to provide antenna location information of a second or third docking host, possibly including an indication to a dockee of the best host to dock with if there are multiple docking hosts available for docking. In one embodiment, such a system comprises a first device communicating with a second device in a wireless network, the second device receiving location information of an antenna in a third device, the second device providing the first device with the location information of the antenna in the third device, and wherein the first device provides an audio, visual or audiovisual representation of the location of the antenna in the third device.

Fig. 6 shows an embodiment where a wireless docking system consisting of a wireless dockee (WD1) 601 and two wireless docking hosts (WDH1) 602 and (WDH2) 603 that can communicate with each other through a WDH-WDH connection (a Wireless Docking Host to Wireless Docking Host connection). Both (WDH1) 602 and (WDH2) 603 may expose the same wireless docking environment, e.g., WDE2. The hosts (WDH1) 602 and (WDH2) 603 may exchange status information regarding their docking environment. Status information may include antenna location and shape information, signal strength information, frequency information, channel occupancy information, connectivity options and limitations, etc.

If (WD1) 601 discovers WDE2 through (WDH1) 602, it may actually not give the best performance if (WD1) 601 docks with WDE2 through (WDH1) 602. It may be better for (WD1) 601 to dock with WDE2 through (WDH2) 603 instead. For example, it may be because some of the most demanding/high performance peripherals, such as a display, are connected to (WDH2) 603, or because (WDH2) 603 is closer to (WD1) 601, or because (WDH2) 603 has a better antenna, etc. (WDH1) 602 can provide feedback and antenna location information through audio, visual, or audiovisual instructions, as described above, to (WD1) 601 that it is better to dock with (WDH2) 603 instead of (WDH1) 602. In addition, if (WDH2) 603 is in sleep mode, (WDH1) 602 may wake up (WDH2) 603.

As non-limiting examples, certain embodiments herein are applicable to portable audio devices, mobile phones, laptops, tablets, printers, cameras, Wi-Fi Direct enabled devices and other ad-hoc networking enabled devices, wireless docking stations, Wi-Fi Display devices, NFC enabled devices, and Wi-Fi access points. The wireless technology used can be, but is not limited to, as follows: Wi-Fi, Bluetooth, NFC, Zigbee, WiGig 60GHz, WirelessHD.

The foregoing detailed description has set forth a few of the many forms that the invention can take. It is intended that the foregoing detailed description be understood as an illustration of selected forms that the invention can take and not as a limitation to the definition of the invention. It is only the claims, including all equivalents that are intended to define the scope of this invention.

Most preferably, the principles of the invention are implemented as any combination of hardware, firmware and software. Moreover, the software is preferably implemented as an application program tangibly embodied on a program storage unit or computer readable storage medium consisting of parts, or of certain devices and/or a combination of devices. The application program may be uploaded to, and executed by, a machine comprising any suitable architecture. Preferably, the machine is implemented on a computer platform having hardware such as one or more central processing units ("CPUs"), a memory, and input/output interfaces. The computer platform may also include an operating system and microinstruction code. The various processes and functions described herein may be either part of the microinstruction code or part of the application program, or any combination thereof, which may be executed by a CPU, whether or not such computer or processor is explicitly shown. In addition, various other peripheral units may be connected to the computer platform such as an additional data storage unit and a printing unit.

## Claims

1. A method for a first device (550) to communicate with a second device (500) in a wireless network, the method comprising:
receiving, by the first device (550), location information of at least one antenna (510, 520) in the second device (500); **characterized in that** the method comprises
overlaying, by the first device (550), a graphical illustration of the second device with the location information of the at least one antenna and origin information in a visual or audiovisual representation, and
providing, by the first device (550) the visual or audiovisual representation to a user of the first device (550).

2. The method of claim 1, wherein the location information is represented by:
- coordinates (110) in a two-dimensional plane, which is parallel to a predetermined cross section of the second device, with a predetermined spot in the second device as the origin coordinates (120) of the two-dimensional plane; or
- coordinates in a three-dimensional space.

3. The method of claim 1, further comprising receiving, by the first device (550),
- shape information (210) of the at least one antenna in the second device, and/or
- orientation information of the at least one antenna in the second device (500).

4. The method of claim 1, further comprising:
providing an audio, visual or audiovisual instruction for placing of the first device (550) relative to the second device (500) based on the location information.

5. The method of claim 4, wherein
- the audio, visual or audiovisual instruction for placing of the first device (550) relative to the second device (500) is further based on the location of an antenna (556) in the first device (550); and/or
- the audio, visual or audiovisual instruction comprises a real-time placement instruction based on the current relative position between the first device (550) and the second device (500).

6. The method of claim 5, wherein the audio, visual or audiovisual instruction comprises a plurality of locations for the first device (550) to be placed relative to the second device (500), the method further comprising:
measuring a link parameter between the first device (550) and the second device (500) for each of the plurality of locations, and
selecting an optimal location from the plurality of locations based on the Ink parameter.

7. The method of claim 1, wherein the location information is received from a network database.

8. Computer program product for a first device (550) to communicate with a second device (500) in a wireless network, which program is operative to cause a processor to perform the method as claimed in any of the claims 1 to 7.

9. A first device (550) for communicating with a second device (500) in a wireless network, the first device comprising:
a radio connected to an antenna (556) for receiving location information of at least one antenna (510, 520) in the second device (500); **characterized in that** the first device comprises a visual or audiovisual output (552) for providing a visual or audiovisual representation of an overlay of a graphical illustration of the second device with the location information of the at least one antenna in the second device (500) and origin information.

10. The first device of claim 9, wherein the visual or audiovisual output provides an audio, visual or audiovisual instruction for placing of the first device (550) relative to the second device (500) based on the location information.

11. The first device of claim 9, wherein the radio is further configured to receive shape information of the at least one antenna in the second device (500); and wherein the visual or audiovisual representation further comprises a graphical illustration of the shape of the at least one antenna in the second device (500).

12. The first device of claim 9, further comprising:
a compass for determining the orientation of the first device;
wherein the radio is further configured to receive orientation information of the at least one antenna in the second device; and
wherein the visual or audiovisual output is further configured to provide an audio, visual or audiovisual instruction for aligning the first device (550) relative to the second device (500) based on the orientation information.

13. A wireless communications system, comprising a first device (601) communicating with a second device (602); the second device (602) receiving location information of an antenna in a third device (603), the second device (602) providing the first device (601) with the location information of the antenna in the third device (603);
**characterized in that** the first device (601) provides a visual or audiovisual representation of an overlay of a graphical illustration of the third device with the location information of the antenna in the third device (603) and origin information.

## Patentansprüche

1. Verfahren zur Kommunikation eines ersten Geräts (550) mit einem zweiten Gerät (500) in einem drahtlosen Netzwerk, wobei gemäß dem Verfahren:
von dem ersten Gerät (550) Positionsinformationen von mindestens einer Antenne (510, 520) in dem zweiten Gerät (500) empfangen werden;
**dadurch gekennzeichnet, dass** gemäß dem Verfahren
von dem ersten Gerät (550) eine grafische Darstellung des zweiten Geräts mit den Positionsinformationen der mindestens einen Antenne sowie Ursprungsinformationen in einer visuellen oder audiovisuellen Darstellung überlagert wird, und
von dem ersten Gerät (550) die visuelle oder audiovisuelle Darstellung einem Benutzer des ersten Geräts (550) zugeführt wird.

2. Verfahren nach Anspruch 1, wobei die Positionsinformationen dargestellt werden durch:
- Koordinaten (110) in einer zweidimensionalen Ebene, die parallel zu einem vorgegebenen Querschnitt des zweiten Geräts liegt, mit einem vorgegebenen Punkt in dem zweiten Gerät als die Ursprungskoordinaten (120) der zweidimensionalen Ebene; oder
- Koordinaten in einem dreidimensionalen Raum.

3. Verfahren nach Anspruch 1, wonach weiterhin von dem ersten Gerät (550) empfangen werden:
- Forminformationen (210) der mindestens einen Antenne in dem zweiten Gerät, und/oder
- Ausrichtungsinformationen der mindestens einen Antenne in dem zweiten Gerät (500).

4. Verfahren nach Anspruch 1, wonach weiterhin:
- eine Audio-, visuelle oder audiovisuelle Anweisung vorgesehen wird, um, auf den Positionsinformationen basierend, das erste Gerät (550) relativ zu dem zweiten Gerät (500) zu platzieren.

5. Verfahren nach Anspruch 4, wobei
- die Audio-, visuelle oder audiovisuelle Anweisung zur Platzierung des ersten Geräts (550) relativ zu dem zweiten Gerät (500) weiterhin auf der Position einer Antenne (556) in dem ersten Gerät (550) basiert; und/oder
- die Audio-, visuelle oder audiovisuelle Anweisung eine Echtzeit-Platzierungsanweisung aufgrund der aktuellen, relativen Position zwischen dem ersten Gerät (550) und dem zweiten Gerät (500) umfasst.

6. Verfahren nach Anspruch 5, wobei die Audio- visuelle oder audiovisuelle Anweisung mehrere Positionen umfasst, in denen das erste Gerät (550) relativ zu dem zweiten Gerät (500) zu platzieren ist, wobei gemäß dem Verfahren weiterhin:
- ein Link-Parameter zwischen dem ersten Gerät (550) und dem zweiten Gerät (500) für jede der mehreren Positionen gemessen wird, und
- eine optimale Position aus den mehreren Positionen aufgrund des Link-Parameters ausgewählt wird.

7. Verfahren nach Anspruch 1, wobei die Positionsinformationen von einer Netzwerk-Datenbank empfangen werden.

8. Computerprogrammprodukt zur Kommunikation eines ersten Geräts (550) mit einem zweiten Gerät (500) in einem drahtlosen Netzwerk, wobei das Programm so arbeitet, dass es einen Prozessor veranlasst, das Verfahren nach einem der Ansprüche 1 bis 7 auszuführen.

9. Erstes Gerät (550) zur Kommunikation mit einem zweiten Gerät (500) in einem drahtlosen Netzwerk, wobei das erste Gerät umfasst:
- ein mit einer Antenne (556) verbundenes Funkgerät, um Positionsinformationen von mindestens einer Antenne (510, 520) in dem zweiten Gerät (500) zu empfangen;
**dadurch gekennzeichnet, dass** das erste Gerät umfasst:
- eine visuelle oder audiovisuelle Ausgabe (552) zur Bereitstellung einer visuellen oder audiovisuellen Darstellung einer Überlagerung einer grafischen Darstellung des zweiten Geräts mit den Positionsinformationen der mindestens einen Antenne in dem zweiten Gerät (500) und Ursprungsinformationen.

10. Erstes Gerät nach Anspruch 9, wobei die visuelle oder audiovisuelle Ausgabe eine Audio-, visuelle oder audiovisuelle Anweisung vorsieht, um, auf den Positionsinformationen basierend, das erste Gerät (550) relativ zu dem zweiten Gerät (500) zu platzieren.

11. Erstes Gerät nach Anspruch 9, wobei das Funkgerät weiterhin so konfiguriert ist, dass es Forminformationen der mindestens einen Antenne in dem zweiten Gerät (500) empfängt; und wobei die visuelle oder audiovisuelle Darstellung weiterhin eine grafische Darstellung der Form der mindestens einen Antenne in dem zweiten Gerät (500) umfasst.

12. Erstes Gerät nach Anspruch 9, weiterhin umfassend:
- einen Kompass zum Ermitteln der Ausrichtung des ersten Geräts;
wobei das Funkgerät weiterhin so konfiguriert ist, dass es Ausrichtungsinformationen der mindestens einen Antenne in dem zweiten Gerät empfängt; und
wobei die visuelle oder audiovisuelle Ausgabe weiterhin so konfiguriert ist, dass sie eine Audio-, visuelle oder audiovisuelle Anweisung bereitstellt, um, auf den Ausrichtungsinformationen basierend, das erste Geräts (550) relativ zu dem zweiten Gerät (500) auszurichten.

13. Drahtloses Kommunikationssystem, umfassend ein erstes Gerät (601) in Kommunikation mit einem zweiten Gerät (602); wobei das zweite Gerät (602) Positionsinformationen einer Antenne in einem dritten Gerät (603) empfängt, wobei das zweite Gerät (602) das erste Gerät (601) mit den Positionsinformationen der Antenne in dem dritten Gerät (603) versieht;
**dadurch gekennzeichnet, dass** das erste Gerät (601) eine visuelle oder audiovisuelle Darstellung einer Überlagerung einer grafischen Darstellung des dritten Geräts mit den Positionsinformationen der Antenne in dem dritten Gerät (603) und Ursprungsinformationen bereitstellt.

## Revendications

1. Procédé pour un premier dispositif (550) pour communiquer avec un deuxième dispositif (500) dans un réseau sans fil, le procédé comprenant :
la réception, par le premier dispositif (550), d'informations de localisation d'au moins une antenne (510, 520) dans le deuxième dispositif (500) ;
**caractérisé en ce que** le procédé comprend
la superposition, par le premier dispositif (550), d'une illustration graphique du deuxième dispositif avec les informations de localisation de l'au moins une antenne et des informations d'origine dans une représentation visuelle ou audiovisuelle, et
la fourniture, par le premier dispositif (550) de la représentation visuelle ou audiovisuelle à un utilisateur du premier dispositif (550).

2. Procédé selon la revendication 1, dans lequel les informations de localisation sont représentées par :
- des coordonnées (110) dans un plan en deux dimensions, qui est parallèle à une section transversale prédéterminée du deuxième dispositif, avec un point prédéterminé dans le deuxième dispositif en tant que coordonnées d'origine (120) du plan en deux dimensions ; ou
- des coordonnées dans un espace en trois dimensions.

3. Procédé selon la revendication 1, comprenant en outre la réception, par le premier dispositif (550),
- d'informations de forme (210) de l'au moins une antenne dans le deuxième dispositif, et/ou
- d'informations d'orientation de l'au moins une antenne dans le deuxième dispositif (500).

4. Procédé selon la revendication 1, comprenant en outre :
la fourniture d'une instruction audio, visuelle ou audiovisuelle pour le positionnement du premier dispositif (550) par rapport au deuxième dispositif (500) sur la base des informations de localisation.

5. Procédé selon la revendication 4, dans lequel
- l'instruction audio, visuelle ou audiovisuelle pour le positionnement du premier dispositif (550) par rapport au deuxième dispositif (500) est en outre basé sur la localisation d'une antenne (556) dans le premier dispositif (550) ; et/ou
- l'instruction audio, visuelle ou audiovisuelle comprend une instruction de positionnement en temps réel sur la base de la position relative actuelle entre le premier dispositif (550) et le deuxième dispositif (500).

6. Procédé selon la revendication 5, dans lequel l'instruction audio, visuelle ou audiovisuelle comprend une pluralité de localisations pour le premier dispositif (550) à positionner par rapport au deuxième dispositif (500), le procédé comprenant en outre :
la mesure d'un paramètre de lien entre le premier dispositif (550) et le deuxième dispositif (500) pour chacune de la pluralité de localisations, et
la sélection d'une localisation optimale à partir de la pluralité de localisations sur la base du paramètre de lien.

7. Procédé selon la revendication 1, dans lequel les informations de localisation sont reçues en provenance d'une base de données réseau.

8. Produit de programme informatique pour un premier dispositif (550) pour communiquer avec un deuxième dispositif (500) dans un réseau sans fil, lequel programme peut fonctionner pour amener un processeur à réaliser le procédé selon l'une quelconque des revendications 1 à 7.

9. Premier dispositif (550) pour communiquer avec un deuxième dispositif (500) dans un réseau sans fil,
le premier dispositif comprenant :
une radio connectée à une antenne (556) pour recevoir des informations de localisation d'au moins une antenne (510, 520) dans le deuxième dispositif (500) ;
**caractérisé en ce que** le premier dispositif comprend
une sortie visuelle ou audiovisuelle (552) pour fournir une représentation visuelle ou audiovisuelle d'une superposition d'une illustration graphique du deuxième dispositif avec les informations de localisation de l'au moins une antenne dans le deuxième dispositif (500) et des informations d'origine.

10. Premier dispositif selon la revendication 9, dans lequel la sortie visuelle ou audiovisuelle fournit une instruction audio, visuelle ou audiovisuelle pour positionner le premier dispositif (550) par rapport au deuxième dispositif (500) sur la base des informations de localisation.

11. Premier dispositif selon la revendication 9, dans lequel la radio est en outre configurée pour recevoir des informations de forme de l'au moins une antenne dans le deuxième dispositif (500) ; et dans lequel la représentation visuelle ou audiovisuelle comprend en outre une illustration graphique de la forme de l'au moins une antenne dans le deuxième dispositif (500).

12. Premier dispositif selon la revendication 9, comprenant en outre :
une boussole pour déterminer l'orientation du premier dispositif ;
dans lequel la radio est en outre configurée pour recevoir des informations d'orientation de l'au moins une antenne dans le deuxième dispositif ; et
dans lequel la sortie visuelle ou audiovisuelle est en outre configuré pour fournir une instruction audio, visuelle ou audiovisuelle pour aligner le premier dispositif (550) par rapport au deuxième dispositif (500) sur la base des informations d'orientation.

13. Système de communication sans fil, comprenant un premier dispositif (601) communiquant avec un deuxième dispositif (602) ; le deuxième dispositif (602) recevant des informations de localisation d'une antenne d'un troisième dispositif (603), le deuxième dispositif (602) fournissant au premier dispositif (601) les informations de localisation de l'antenne dans le troisième dispositif (603) ;
**caractérisé en ce que** le premier dispositif (601) fournit une représentation visuelle ou audiovisuelle d'une superposition d'une illustration graphique du troisième dispositif avec les informations de localisation de l'antenne dans le troisième dispositif (603) et des informations d'origine.
